# EUROPEAN PATENT APPLICATION

(11) **EP 3 381 965 A1**
(43) Date of publication of application: **03.10.2018**
(21) Application number: 17163344.9
(22) Date of filing: 28.03.2017
(51) Int. Cl.: C08G 65/40, C08G 75/23

(54) **A PROCESS FOR PREPARING A POLYARYLENESULFONE/POLYESTER BLOCK COPOLYMER (P)**

(71) Applicant: BASF SE, 67056 Ludwigshafen am Rhein (DE)
(72) Inventor: The designation of the inventor has not yet been filed
(74) Representative: Baier, Martin

(57) **Abstract**

The present invention relates to a process for preparing a polyarylenesulfone/polyester block copolymer (P) and to the polyarylenesulfone/polyester block copolymer (P) as such.

## Description

The present invention relates to a process for preparing a polyarylenesulfone/polyester block copolymer (P) and to the polyarylenesulfone/polyester block copolymer (P) as such.

High-performance engineering thermoplastics are a group of polymers that exhibit a balance of properties, such as strength, stiffness, impact resistance, and long-term dimensional stability, that make them especially attractive as structural materials in automotive and electronic industries, where such thermoplastics are suitable as replacements for metals because of the reduction in weight that can often be achieved.

For a particular application, a single thermoplastic may not offer all the required properties and, therefore, means to correct this deficiency are of interest. One particularly appealing route is through copolymerization with two or more polymers which individually have the properties sought to give a material with the desired combination of properties.

Polyarylenesulfone polymers belong to a group of high-performance thermoplastics and are characterized by high heat distortion resistance, good mechanical properties and an inherent flame retardance, however, polyarylenesulfone polymers are typically amorphous and there is a current lack of polyarylenesulfone polymers with high crystallinity and processability. Moreover, the use of amorphous polyarylenesulfone polymers is often hindered due to their poor solvent resistance.

In order to combat these deficiencies, polyarylenesulfone polymers can be copolymerized, for example, with polyesters. Semicrystalline polyesters exhibit superior solvent resistance compared to amorphous polyarylenesulfones and provide crystallizable segments in a polyarylenesulfone/polyester copolymer, while the segments of the polyarylenesulfone polymers remain amorphous. However, the incorporation of higher amounts of polyarylenesulfone polymers into polyarylenesulfone/polyester copolymers prevents the crystallization of the copolymers. Therefore, in order to maintain crystallinity, low incorporation of polyarylenesulfone polymers is necessary and the properties of the resulting copolymer resemble more closely the polyester of choice.

The synthesis of targeted copolymers of polyarylenesulfone polymers and polyesters requires the functionalization of the polyarylenesulfone polymer with an alcohol. Procedures to accomplish such functionalization are known in the prior art.

Turner et al. "New semicrystalline block copolymers of poly(arylene ether sulfone)s and poly(1,4-cyclohexylenedimethylene terephthalate), Polymer, 2015, 74, 86 to 93*",* discloses the preparation of copolymers comprising units derived from polyarylenesulfones and poly(1,4-cyclohexylenedimethylene terephthalate) units. Prior to the copolymerization, the polyarylenesulfone units are functionalized with hydroxyethyl end groups which are introduced via ethylene carbonate under evolution of carbon dioxide. The disclosed copolymers have to comprise at least 50% by weight of poly(1,4-cyclohexylenedimethylene terephthalate) units to obtain observable crystallinity.

Similarly, Long et al. disclose in "Synthesis and Characterization of Polysulfone-Containing Poly(butylene terephthalate) Segmented Block Copolymers, Macromolecules, 2014, 47, 8171 to 8177", the functionalization of polyarylenesulfone polymers with a hydroxylethyl end group which is introduced via reaction of the polyarylenesulfone polymer with ethylene carbonate. The hydroxyethyl-functionalized polyarylenesulfone is further reacted with 1,4-butanediole and dimethyl terephthalate to form the respective polyarylenesulfone/polyester block copolymer.

Although, the introduction of hydroxyethyl end groups to polyarylenesulfones via ethylene carbonate described in the prior art is a quantitative reaction, said reaction requires the isolation of polyarylenesulfone oligomers prior to the functionalization, results in extended reaction times and produces carbon dioxide as a by-product. The polyarylenesulfone/polyester copolymers require high amounts of the polyester component in order to sufficiently crystallize, which severely impacts their overall properties.

The object of the present invention is therefore to provide a process for preparing polyarylenesulfone/polyester block copolymers, which does not have, or has only a reduced degree, the disadvantages of the methods described in the prior art. The process should be simple to carry out, as far as possible not be prone to error, and should be inexpensive. The process according to the invention should be more efficient to carry out and the resulting copolymers should exhibit crystallinity even at higher amounts of polyarylenesulfone segments incorporated into the block copolymers.

This object was achieved by a process for preparing a polyarylenesulfone/polyester block copolymer (P), comprising the steps:
ai) converting a reaction mixture (RM1), which comprises the components,
   (A1) at least one polyarylenesulfone polymer (PS1) comprising phenolic hydroxy groups,
   (A2) at least one aliphatic alcohol having a halogen substituent,
   in the presence of at least one aprotic polar solvent, to obtain a reaction mixture (RM2) comprising at least one functionalized polyarylenesulfone polymer (PS2) having terminal hydroxyalkyl groups and the at least one aprotic polar solvent,
aii) separating the at least one functionalized polyarylenesulfone polymer (PS2) from the reaction mixture (RM2),
b) converting a reaction mixture (RM3), which comprises
   (B1) the at least one functionalized polyarylenesulfone polymer (PS2) obtained in step aii),
   (B2) at least one aromatic dicarboxy compound,
   (B3) at least one aliphatic dihydroxy compound,
to obtain a reaction mixture (RM4) comprising the polyarylenesulfone/polyester block copolymer (P).

It has surprisingly been found that the use of at least one aliphatic alcohol having a halogen substituent (A2) instead of organic carbonates such as ethylene carbonate is suitable for the formation of functionalized polyarylenesulfones having terminal hydroxyalkyl groups. The inventive process thus avoids the formation of gaseous by-products and circumvents undesired pressure increases in the reaction vessel(s).

The inventive process is also less susceptible to residual amounts of components used to during the preparation of the polyarylenesulfone polymer (PS1) starting material and the preparation of the functionalized polyarylenesulfone polymer (PS2), which serves as an intermediate product to form the polyarylenesulfone/polyester block copolymers, can further be carried out in a one-pot synthesis without any additional work-up steps which are usually required to isolate the polyarylenesulfone polymer (PS1). If such a one-pot synthesis is carried out, considerably less waste is generated and an improved atom efficiency compared to the prior art is established.

If a halide salt is used in the preparation of functionalized polyarylenesulfone polymers (PS2), the functionalized polyarylenesulfone polymers (PS2) can be obtained in very high yields and very high conversions with drastically reduced reaction times.

It has further surprisingly been found that polyarylenesulfone/polyester block copolymers (P) obtained by the process according to the invention exhibit crystallinity even at high contents of polyarylenesulfone units in the polyarylenesulfone/polyester block copolymers (P), while maintaining their melt homogeneity. Thus, the polyarylenesulfone/polyester block copolymers (P) also exhibit high glass transition temperatures.

Furthermore, contrary to the observations in the prior art, the use of polyarylenesulfone polymers (PS1) with high number-average molecular weights (Mₙ) promotes the crystallization properties of the polyester segments in the resulting polyarylenesulfone/polyester block copolymers (P), and in particular of polyester segments having a high number-average molecular weights (Mₙ). The variation of the number-average molecular weight (Mₙ) of the polyarylenesulfone and polyester segments thus allows for the adjustment of the physical properties of the polyarylenesulfone/polyester block copolymers (P).

The present invention is described hereinafter in more detail.

### Step ai)

In step ai), a reaction mixture (RM1) is converted in the presence of at least one aprotic polar solvent to obtain a reaction mixture (RM2). The reaction mixture (RM1) comprises at least one polyarylenesulfone polymer (PS1) comprising phenolic hydroxy groups as component (A1) and at least one aliphatic alcohol having a halogen substituent as component (A2). The components (A1) and (A2) are converted in a substitution reaction.

Reaction mixture (RM1) is understood to mean the mixture that is used in step ai) of the present invention for preparing the at least one functionalized polyarylenesulfone polymer (PS2). In the present case, all details given with respect to the reaction mixture (RM1) thus relate to the mixture that is present prior to the substitution reaction. The substitution reaction takes place during step ai) of the process according to the invention, in which the reaction mixture (RM1) reacts by substitution reaction of (A1) and (A2) to give the at least one functionalized polyarylenesulfone polymer (PS2) having terminal hydroxyalkyl groups.

### Component (A1)

The reaction mixture (RM1) comprises at least one polyarylenesulfone polymer (PS1) comprising phenolic hydroxyl groups as component (A1). The terms "polyarylenesulfone polymer (PS1)" and "component (A1)" are used synonymously in the context of the present invention. The term "at least one polyarylenesulfone polymer", in the present case, is understood to mean exactly one polyarylenesulfone polymer and also mixtures of two or more polyarylenesulfone polymer.

In principal, any polyarylenesulfone polymer can be used as component (A1) in the process according to the invention. Suitable polyarylenesulfone polymers and their method of preparation are known by the person skilled in the art.

Preferred polyarylenesulfone polymers (PS1) comprise units of the general formula (I) in which 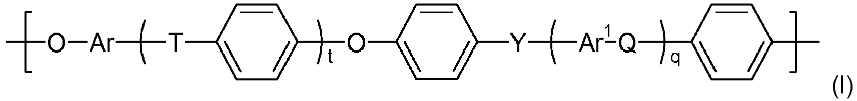 in which
- t, q: are each independently 0, 1, 2 or 3,
- Q, T, Y: are each independently a chemical bond or group selected from -O-, -S-, -SO₂-, S=O, C=O, -N=N-, -CR^{a}R^{b}-, where R^{a} and R^{b} are each independently a hydrogen atom, C₁-C₁₀-alkyl, C₁-C₁₀-alkoxy or C₆-C₁₈-aryl, where at least one of Q, T and Y is not -O-, and at least one of Q, T and Y is -SO₂-, and
- Ar, Ar¹: are each independently an arylene group having from 6 to 18 carbon atoms.

The present invention accordingly also provides a process, in which the polyarylenesulfone polymer (PS1) comprises units of the general formula (I) 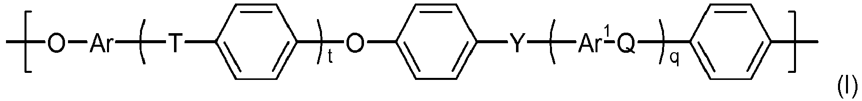 in which
- t, q: are each independently 0, 1, 2 or 3,
- Q, T, Y: are each independently a chemical bond or group selected from -O-, -S-,-SO₂-, S=O, C=O, -N=N-, -CR^{a}R^{b}-, where R^{a} and R^{b} are each independently a hydrogen atom, C₁-C₁₀-alkyl, C₁-C₁₀-alkoxy or C₆-C₁₈-aryl, where at least one of Q, T and Y is not -O-, and at least one of Q, T and Y is -SO₂-, and
- Ar, Ar¹: are each independently an arylene group having from 6 to 18 carbon atoms.

If Q, T or Y, with the abovementioned preconditions, is a chemical bond, this is understood to mean that the adjacent group on left-hand side and the adjacent group on the right-hand side have direct linkage to one another by way of a chemical bond.

When Q, T or Y are -CR^{a}R^{b}-, R^{a} and R^{b} are each independently hydrogen, C₁-C₁₀-alkyl, C₁-C₁₂-alkoxy or C₆-C₁₈-aryl.

Preferred C₁-C₁₀-alkyl groups for R^{a} and R^{b} include linear and branched, saturated alkyl groups of 1 to 10 carbon atoms. The following moieties are suitable in particular: C₁-C₆-alkyl, such as methyl, ethyl, n-propyl, isopropyl, n-butyl, sec-butyl, tert-butyl, 2- or 3-methylpentyl or comparatively long-chain moieties such as heptyl, octyl, nonyl, decyl, undecyl, lauryl and the branched analogs thereof. Further preferred C₁-C₁₀-alkyl groups also include C₃-C₁₀-cycloalkyl moieties, e.g. cyclopropyl, cyclobutyl, cyclopentyl, cyclohexyl, cycloheptyl, cyclooctyl, cyclopropylmethyl, cyclopropylethyl, cyclopropylpropyl, cyclobutylmethyl, cyclobutylethyl, cyclopentylethyl, cyclopentylpropyl, cyclopentylbutyl, cyclopentylpentyl, cyclohexylmethyl, cyclohexyldimethyl or cyclohexyltrimethyl.

Alkyl moieties in the C₁-C₁₀-alkoxy groups for R^{a} and R^{b} include the above-defined alkyl groups of 1 to 10 carbon atoms.

Ar and Ar¹ are each independently C₆-C₁₈-aryl. Proceeding from the starting materials hereinbelow, Ar preferably derives from an electron-rich aromatic substance very capable of attacking electrophilic moieties, preferably selected from the group consisting of hydrochinone, resorcinol, dihydroxynaphthalene, in particular 2,7-dihydroxynaphthalene, and 4,4'-bisphenol.

Ar and Ar¹ in the preferred embodiment of the general formula (I) are each preferably selected independently from the group consisting of 1,4-phenylene, 1,3-phenylene, naphthylene and 4,4'-bisphenylene.

Polyarylenesulfone polymers (PS1) are preferably those which comprise at least one of the following structural units (Ia) to (Io):

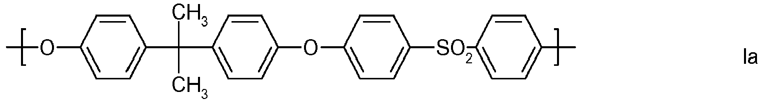

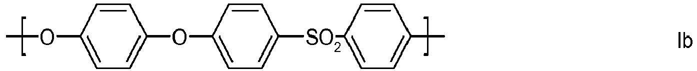

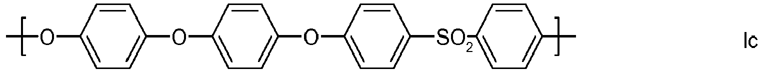

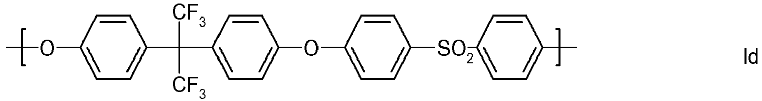

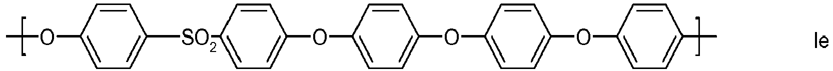

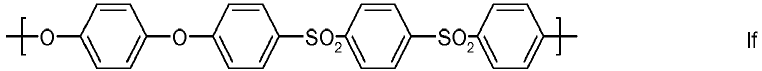

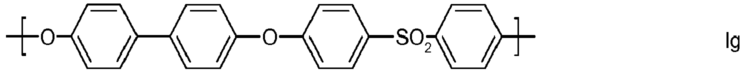

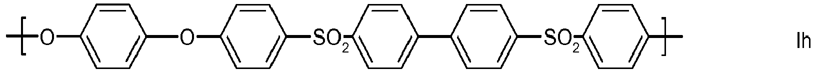

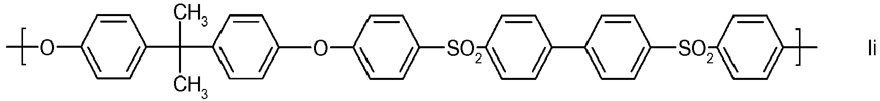

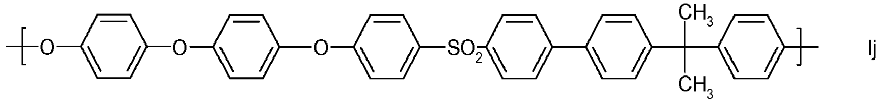

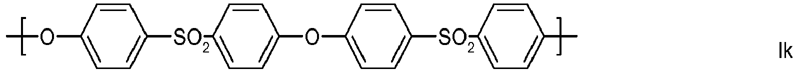

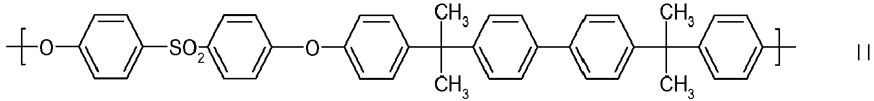

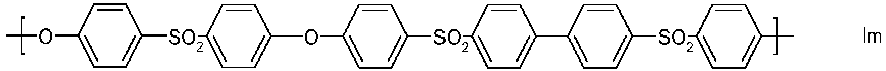

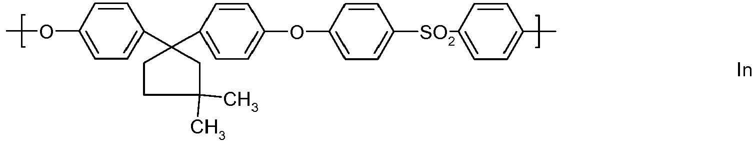

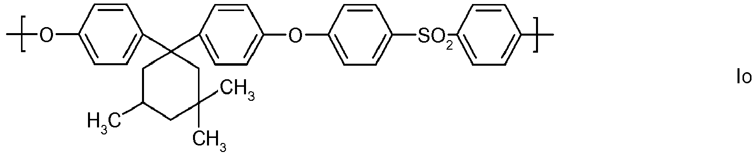

In addition to the units Ia to Io, preference is also given to those units in which one or more 1,4-phenylene units are replaced by units derived from resorcinol or dihydroxynaphthalene.

Structural units (Ia), (Ib), (Ig) and (Ik) or copolymers thereof are used with preference as repeating units of the general formula (I).

Preferably, the at least one polyarylenesulfone polymer (PS1) comprises at least 50% by weight, based on the total weight of the at least one polyarylenesulfone polymer (PS1), of units of the general formula (Ik):

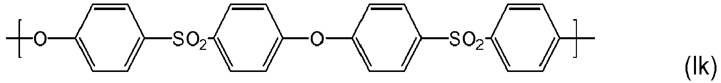

The at least one polyarylenesulfone polymer (PS1) more preferably comprises at least 80% by weight, especially preferably at least 90% by weight, more especially preferably at least 95% by weight and most preferably at least 99% by weight, based in each case on the total weight of the at least one polyarylenesulfone polymer (PS1), of units of the general formula (Ik).

In one particularly preferred embodiment, the at least one polyarylenesulfone polymer (PS1) consists of units of the general formula (Ik). Such polyarylenesulfones are referred to as polyethersulfone (PESU).

Apart from the repeating units mentioned, the structure of the end groups is essential to the present invention. The polyarylenesulfone polymer (PS1) comprises, in accordance with the invention, phenolic hydroxy groups. In the context of the present invention, "phenolic hydroxy groups" are understood to mean hydroxy groups bonded to an aromatic ring. The aromatic rings mentioned are preferably 1,4-phenylene groups.

The proportion of phenolic hydroxy groups in the polyarylenesulfone polymer (PS1) is preferably determined by determining the hydroxy groups by means of potentiometric titration, and determining the organically bound halogen groups by means of atomic spectroscopy and subsequent calculation of the respective numerical proportions in % by weight or mol-%. Appropriate methods are known to those skilled in the art.

The polyarylenesulfone polymer (PS1) preferably comprises at least 50 mol-%, more preferably at least 70 mol-% and especially preferably at least 90 mol-% of phenolic hydroxy groups, based on the total molar amount of hydroxy groups and organically bound halogen groups in the polyarylenesulfone polymer (PS1).

The phenolic hydroxy groups are preferably terminal groups (end groups) of the at least one polyarylenesulfone polymer (PS1). The terms "terminal group" or "end group", in the present case, is understood to mean functional groups at the end of the chain of a linear polymer, i.e. at the end of the chain of the at least one polyarylenesulfone polymer (PS1).

The number-average molecular weight (Mₙ) of the polyarylenesulfone polymer (PS1) is generally in the range from 3,000 to 20,000 g/mol, preferably in the range from 5,000 to 18,000 g/mol and more preferably in the range from 8,000 to 15,000 g/mol. The weight-average molecular weights (Mₙ) are measured using gel permeation chromatography (GPC).

The weight-average molecular weight (M_{w}) of the polyarylenesulfone polymer (PS1) is generally in the range from 3,000 to 40,000 g/mol, preferably in the range from 10,000 to 30,000 g/mol. The weight-average molecular weights (M_{w}) are measured using gel permeation chromatography (GPC).

The polydispersity (Q) is defined as the quotient of the weight-average molecular weight (M_{w}) and the number-average molecular weight (Mₙ). The polydispersity (Q) of the polyarylenesulfone polymer (PS1) preferably is in the range from 1.5 to 3.0, more preferably in the range from 1.8 to 2.5 and especially preferably in the range from 2.0 to 2.3. The polydispersities are measured using gel permeation chromatography (GPC).

The polyarylenesulfone polymer (PS1) used in the process according to the invention is particularly preferably formed by converting the components (C1) and (C2) in the presence of at least one aprotic polar solvent and at least one metal carbonate. The component (C1) is reacted with component (C2) in a polycondensation reaction.

### Component (C1)

In context of the present invention, the term "aromatic dihalogen compound" and "component (C1)" are used synonymously. The term "at least one aromatic dihalogen compound", in the present case, is understood to mean exactly one aromatic dihalogen compound and also mixtures of two or more aromatic dihalogen compounds.

Component (C1) is preferably used as a monomer and not as a prepolymer.

Preferred aromatic dihalogen compounds are the 4,4'-dihalodiphenylsulfones. Particular preference is given to 4,4'-dichlorodiphenylsulfone, 4,4'-difluorodiphenylsulfone and 4,4'-dibromodiphenylsulfone as component (C1). 4,4'-dichlorodiphenylsulfone and 4,4'-difluorodiphenylsulfone are particularly preferred, while 4,4'-dichlorodiphenylsulfone is most preferred.

Preferably, component (C1) comprises at least 50% by weight of at least one aromatic dihalogen compound selected from the group consisting of 4,4'-dichlorodiphenylsulfone and 4,4'-difluorodiphenylsulfone, based on the total weight of component (C1).

The present invention accordingly also provides a process, in which component (C1) comprises at least 50% by weight of at least one aromatic dihalogen compound selected from the group consisting of 4,4'-dichlorodiphenylsulfone and 4,4'-difluorodiphenylsulfone, based on the total weight of component (C1).

In a particularly preferred embodiment, component (C1) comprises at least 80% by weight, preferably at least 90% by weight and more preferably at least 98% by weight of at least one aromatic dihalogen compound selected from the group consisting of 4,4'-dichlorodiphenylsulfone and 4,4'-difluorodiphenylsulfone, based on the total weight of component (C1).

In a further particularly preferred embodiment, component (C1) consists essentially of at least one aromatic dihalogen compound selected from the group consisting of 4,4'-dichlorodiphenylsulfone and 4,4'-difluorodiphenylsulfone.

The term "consisting essentially of", in the present case, is understood to mean that component (C1) comprises more than 99% by weight, preferably more than 99.5% by weight and particularly preferably more than 99.9% by weight of at least one aromatic dihalogen compound selected from the group consisting of 4,4'-dichlorodiphenylsulfone and 4,4'-difluorodiphenylsulfone, based in each case on the total weight of component (C1). In these embodiments, 4,4'-dichlorodiphenylsulfone is particularly preferred as component (C1).

In a further particularly preferred embodiment, component (C1) consists of 4,4'-dichlorodiphenylsulfone.

### Component (C2)

In context of the present invention, the term "at least one aromatic dihydroxy compound" and "component (C2)" are used synonymously. The term "at least one aromatic dihydroxy compound", in the present case, is understood to mean exactly one aromatic dihydroxy compound and also mixtures of two or more aromatic dihydroxy compounds.

The aromatic dihydroxy compounds used are typically compounds having two phenolic hydroxyl groups. Since the conversion of the components (C1) and (C2) is carried out in the presence of at least one metal carbonate, the hydroxyl groups of component (C2) maybe present partially in deprotonated form during the polycondensation.

Component (C2) is preferably used as a monomer and not as a prepolymer.

Suitable aromatic dihydroxy compounds as component (C2) are known to the person skilled in the art and can be any aromatic dihydroxy compounds.

Preferred aromatic dihydroxy compounds are 4,4'-dihydroxybiphenyl, 4,4'-dihydroxydiphenylsulfone, bisphenol A, 4,4'-dihydroxybenzophenone and hydroquinone. 4,4'-Dihydroxybiphenyl and 4,4'-dihydroxydiphenylsulfone are particularly preferred, while 4,4'-dihydroxydiphenylsulfone is most preferred.

Preferably, component (C2) comprises at least 50% by weight of at least one aromatic dihydroxy compound selected from the group consisting of 4,4'-dihydroxybiphenyl, 4,4'-dihydroxydiphenylsulfone, bisphenol A, 4,4'-dihydroxybenzophenone and hydroquinone, based on the total weight of component (C2).

The present invention accordingly also provides a process, in which component (C2) comprises at least 50% by weight of at least one aromatic dihydroxy compound selected from the group consisting of 4,4'-dihydroxybiphenyl, 4,4'-dihydroxy-diphenylsulfone, bisphenol A, 4,4'-dihyxdroxybenzophenone and hydroquinone, based on the total weight of component (C2).

In a particularly preferred embodiment, component (C2) comprises at least 80% by weight, more preferably at least 90% by weight and especially preferably at least 98% by weight of at least one aromatic dihydroxy compound selected from the group consisting of 4,4'-dihydroxybiphenyl, 4,4'-dihydroxydiphenylsulfone, bisphenol A, 4,4'-dihydroxybenzophenone and hydroquinone, based on the total weight of component (C2).

In a further particularly preferred embodiment, component (C2) consists essentially of at least one aromatic dihydroxy compound selected from the group consisting of 4,4'-dihydroxybiphenyl, 4,4'-dihydroxydiphenylsulfone, bisphenol A, 4,4'-dihyxdroxybenzo-phenone and hydrochinone.

The term "consisting essentially of", in the present case, is understood to mean that component (C2) comprises more than 99% by weight, preferably more than 99.5% by weight and particularly preferably more than 99.9% by weight of at least one aromatic dihydroxy compound selected from the group consisting of 4,4'-dihydroxybiphenyl, 4,4'-dihydroxydiphenylsulfone, bisphenol A, 4,4'-dihydroxybenzo-phenone and hydrochinone, based in each case on the total weight of component (C2). In these embodiments, 4,4'-dihydroxydiphenylsulfone is particularly preferred as component (C2).

In a further particularly preferred embodiment, component (C2) consists of 4,4'-dihydroxydiphenylsulfone.

The conversion of the components (C1) and (C2) is preferably carried out with a molar excess of component (C2). Preferably, the molar ratio of (C2) to (C1) is in the range from 1.005 to 1.2, more preferably in the range from 1.01 to 1.15 and most preferably in the range from 1.02 to 1.1.

The conversion of the components (C1) and (C2) is further carried out in the presence of at least one aprotic polar solvent and at least one metal carbonate.

The term "at least one aprotic polar solvent", in the present case, is understood to mean exactly one aprotic polar solvent and also mixtures of two or more aprotic polar solvents. Likewise, the term "at least one metal carbonate" in the present case, is understood to mean exactly one metal carbonate and also mixtures of two or more metal carbonates.

Aprotic polar solvents suitable for the conversion of the components (C1) and (C2) are known by the person skilled in the art. Suitable solvent generally have a boiling point in the range from 80 to 320 °C, especially 100 to 280 °C, preferably from 150 to 250 °C. Suitable aprotic polar solvents are, for example, high-boiling ethers, esters, ketones, asymmetrically halogenated hydrocarbons, anisole, dimethylformamide, dimethyl sulfoxide, sulfolane, N-methylpyrrolidone, N-ethylpyrrolidone, N,N-dimethylacetamide and mixtures thereof. Especially preferred solvent are N-methylpyrrolidone and/or N,N-dimethylacetamide.

The conversion of the components (C1) and (C2) can optionally be carried out in the presence of a solvent mixture comprising at least one aprotic polar solvent and at least one further solvent. The at least one further solvent preferably is at least one aromatic solvent. Suitable aromatic solvents are known to the person skilled in the art and include benzene, toluene, xylene and mixtures thereof.

The at least one metal carbonate is preferably anhydrous. Suitable metal carbonates are especially anhydrous alkali metal and/or alkaline earth metal carbonates, preferably sodium carbonate, potassium carbonate, calcium carbonate or mixtures thereof. Very particularly, preference is given to potassium carbonate, especially potassium carbonate with a volume-weighted mean particle size of less than 100 µm, determined with a particle sized measuring instrument in a suspension of N-methylpyrrolidone.

The at least one polyarylenesulfone polymer (PS1) can be isolated from the reaction mixture after the conversion of components (C1) and (C2) and then be used in step ai) according to the the invention.

Alternatively, the polyarylenesulfone polymer (PS1) is not isolated from the reaction mixture after the polycondensation of components (C1) and (C2) and step ai) is carried out immediately after the conversion of components (C1) and (C2), i.e. the reaction mixture comprising the polyarylenesulfone polymer (PS1), the at least one aprotic polar solvent and optionally residual amounts of the components (C1), (C2) and the at least one metal carbonate is directly used in step ai) of the process according to the invention and forms the reaction mixture (RM1) after the addition of the at least one alphatic alcohol having a halogen substituent (component (A2)).

Preferably, the polyarylenesulfone polymer (PS1) is not isolated from the reaction mixture after the polycondensation reaction and step ai) is carried out immediately after the conversion of component (C1) and (C2).

The present invention accordingly also provides a process, in which the polyarylenesulfone polymer (PS1) is obtained by converting the components
(C1) at least one aromatic dihalogen compound, and
(C2) at least one aromatic dihydroxy compound,
in the presence of at least one aprotic polar solvent and at least one metal carbonate with a molar excess of component (C2) and wherein step ai) is carried out immediately after the conversion of component (C1) and (C2).

If the conversion of the components (C1) and (C2) was carried out in the presence of a solvent mixture comprising at least one aprotic polar solvent and at least one further solvent, the at least one further solvent is preferably separated from the reaction mixture prior to step ai). Suitable methods for separating the at least one further solvent are generally known to the person skilled in the art and include, for example, distillation.

The reaction mixture (RM1) preferably comprises at least 5% by weight, more preferably at least 10% by weight and especially preferably at least 20% by weight of the at least one polyarylenesulfone polymer (PS1), based on the total weight of the reaction mixture (RM1).

The reaction mixture (RM1) further preferably comprises not more than 60% by weight, more preferably not more than 40% by weight and especially preferably not more than 30% by weight of the at least one polyarylenesulfone polymer (PS1), based on the total weight of the reaction mixture (RM1).

In a preferred embodiment, the reaction mixture (RM1) comprises from 5 to 60% by weight, more preferably from 10 to 40% by weight and especially preferably from 20 to 30% by weight of the at least one polyarylenesulfone polymer (PS1), based on the total weight of the reaction mixture (RM1).

### Component (A2)

The reaction mixture (RM1) comprises at least one aliphatic alcohol having a halogen substituent as component (A2). The terms "at least one aliphatic alcohol having a halogen substituent" and "component (A2)" are used synonymously in the context of the present invention. The term "at least one aliphatic alcohol having a halogen substituent", in the present case, is understood to mean exactly one aliphatic alcohol having a halogen substituent and also mixtures of two or more aliphatic alcohols having a halogen substituent.

In principle, any aliphatic alcohol having halogen a substituent can be used as component (A2) in the process according to the invention. Suitable aliphatic alcohols having a halogen substituent and their method of preparation are known by the person skilled in the art.

The at least one aliphatic alcohol having a halogen substituent can have one or more halogen substituents, however, preference is given to alcohols having exactly one halogen atom.

The at least one aliphatic alcohol having a halogen substituent preferably has the general formula (II)

X¹-CH₂-R¹-CH₂-OH (II)

in which
- R¹: is a chemical bond or C₁-C₁₀-alkandiyl, and
- X¹: is selected from the group consisting of F, Cl, Br and I.

The present invention accordingly also provides a process, in which component (A2) is at least one aliphatic alcohol having a halogen substituent and has the general formula (II)

X¹-CH₂-R¹-CH₂-OH (II)

in which
- R¹: is a chemical bond or C₁-C₁₀-alkanediyl, and
- X¹: is selected from the group consisting of F, Cl, Br and I.

If R¹ is a chemical bond, this is understood to mean that the two CH₂-groups adjacent to R¹ have direct linkage to one another by way of a chemical bond.

The term "C₁-C₁₀-alkandiyl", in the present case, is understood to mean divalent aliphatic hydrocarbon radicals having 1 to 10 carbon atoms. The C₁-C₁₀-alkandiyl groups can be linear or branched and are preferably linear. Particularly preferred C₁-C₁₀-alkandiyl groups for R¹ include methylene, ethylene, propylene, tetramethylene, pentamethylene, hexamethylene, heptamethylene, octamethylene, nonamethylene, decamethylene or the branched analogs thereof.

Preferred aliphatic alcohols having a halogen substituent include, for example, 2-chloro-1-ethanol, 3-chloro-1-propanol, 4-chloro-1-butanol, 3-chloro-2-methyl-1-butanol, 5-chloro-1-pentanol, 4-chloro-2-methyl-1-butanol, 3-chloro-2,2-dimethyl-1-propanol, 2-bromo-1-ethanol, 3-bromo-1-propanol, 4-bromo-1-butanol, 3-bromo-2-methyl-1-butanol, 5-bromo-1-pentanol, 4-bromo-2-methyl-1-butanol, 3-bromo-2,2-dimethyl-1-propanol, 2-iodo-1-ethanol, 3-iodo-1-propanol, 4-iodo-1-butanol, 3-iodo-2-methyl-1-butanol, 5-iodo-1-pentanol, 4-iodo-2-methyl-1-butanol and 3-iodo-2,2-dimethyl-1-propanol.

Preferably, component (A2) comprises at least 50% by weight of at least one aliphatic alcohol having a halogen substituent, selected from the group consisting of 2-chloro-1-ethanol, 3-chloro-1-propanol, 4-chloro-1-butanol, 5-chloro-1-pentanol, 4-chloro-2-methyl-1-butanol and 3-chloro-2,2-dimethyl-1-propanol, based on the total weight of the component (A2).

The present invention accordingly also provides a process, in which component (A2) comprises at least 50% by weight of at least one aliphatic alcohol having a halogen substituent, selected from the group consisting of 2-chloro-1-ethanol, 3-chloro-1-propanol, 4-chloro-1-butanol, 5-chloro-1-pentanol, 4-chloro-2-methyl-1-butanol and 3-chloro-2,2-dimethyl-1-propanol, based on the total weight of the component (A2).

In a particularly preferred embodiment, component (A2) comprises at least 80% by weight, more preferably at least 90% by weight and especially preferably at least 98% by weight of at least one aliphatic alcohol having a halogen substituent selected from the group consisting of 2-chloro-1-ethanol, 3-chloro-1-propanol, 4-chloro-1-butanol, 5-chloro-1-pentanol, 4-chloro-2-methyl-1-butanol and 3-chloro-2,2-dimethyl-1-propanol, based on the total weight of component (A2) in the reaction mixture (RM1).

In a further particularly preferred embodiment, component (A2) consists essentially of at least one aliphatic alcohol having a halogen substituent selected from the group consisting of 2-chloro-1-ethanol, 3-chloro-1-propanol, 4-chloro-1-butanol, 5-chloro-1-pentanol, 4-chloro-2-methyl-1-butanol and 3-chloro-2,2-dimethyl-1-propanol.

The term "consisting essentially of", in the present case, is understood to mean that component (A2) comprises more than 99% by weight, preferably more than 99.5% by weight and particularly preferably more than 99.9% by weight of at least one aliphatic alcohol having a halogen substituent, selected from the group consisting of 2-chloro-1-ethanol, 3-chloro-1-propanol, 4-chloro-1-butanol, 5-chloro-1-pentanol, 4-chloro-2-methyl-1-butanol and 3-chloro-2,2-dimethyl-1-propanol, based in each case on the total weight of component (A2) in the reaction mixture (RM1). In these embodiments, 2-chloro-1-ethanol is particularly preferred as component (A2).

In a further particularly preferred embodiment, component (A2) consists of 2-chloro-1-ethanol.

The reaction mixture (RM1) preferably comprises at least 0.001% by weight, more preferably at least 0.005% by weight and especially preferably at least 0.008% by weight of the at least one aliphatic alcohol having a halogen substituent, based on the total weight of the reaction mixture (RM1).

The reaction mixture (RM1) further preferably comprises not more than 0.1% by weight, more preferably not more than 0.05% by weight and especially preferably not more than 0.01% by weight of the at least one aliphatic alcohol having a halogen substituent, based on the total weight of the reaction mixture (RM1).

In a preferred embodiment, the reaction mixture (RM1) comprises from 0.001 to 0.1% by weight, more preferably from 0.005 to 0.05% by weight and especially preferably from 0.008 to 0.01% by weight of the at least one aliphatic alcohol having a halogen substituent, based on the total weight of the reaction mixture (RM1).

### Component (A3)

The conversion of the reaction mixture (RM1) can preferably be carried out in the presence of at least one halide salt as component (A3). The term "at least one halide salt", in the present case, is understood to mean exactly one halide salt and also two or more halide salts. The terms "at least one halide salt" and "component (A3)" are used synonymously in the context of the present invention.

The at least one halide salt can be any halide salt known to the person skilled in the art. Preferred halide salts are metal halide salts. The at least one halide salt more preferably is an alkali metal halide salt, alkaline earth metal halide salt or mixtures thereof.

More preferably, the reaction mixture (RM1) further comprises as component (A3) at least one halide salt selected from the group consisting of lithium chloride, lithium bromide, lithium iodide, sodium chloride, sodium bromide, sodium iodide, potassium chloride, potassium bromide, potassium iodide, magnesium chloride, magnesium bromide, magnesium iodide, calcium chloride, calcium bromide and calcium iodide.

The present invention accordingly also provides a process, in which the reaction mixture (RM1) further comprises as component (A3) at least one halide salt selected from the group consisting of lithium chloride, lithium bromide, lithium iodide, sodium chloride, sodium bromide, sodium iodide, potassium chloride, potassium bromide, potassium iodide, magnesium chloride, magnesium bromide, magnesium iodide, calcium chloride, calcium bromide and calcium iodide

Particularly preferably, the at least one halide salt is selected from the group consisting of lithium iodide, sodium iodide, potassium iodide, magnesium iodide and calcium iodide. Most preferably, the at least one halide salt is potassium iodide.

If the reaction mixture (RM1) comprises at least one halide salt, the reaction mixture (RM1) preferably comprises at least 0.001% by weight, more preferably at least 0.005% by weight and especially preferably at least 0.008% by weight of component (A3), based on the total weight of the reaction mixture (RM1).

If the reaction mixture (RM1) comprises at least one halide salt, the reaction mixture (RM1) preferably comprises not more than 0.1 % by weight, more preferably not more than 0.05% by weight and especially preferably not more than 0.01% by weight of component (A3), based on the total weight of the reaction mixture (RM1).

In a preferred embodiment, if the reaction mixture (RM1) comprises at least one halide salt, the reaction mixture (RM1) preferably comprises from 0.001 to 0.1% by weight, more preferably from 0.005 to 0.05% by weight and most preferably from 0.008 to 0.1 % by weight of component (A3), based on the total weight of the reaction mixture (RM1).

In the process according to the invention, the individual components of the reaction mixture (RM1) are generally reacted concurrently. The individual components may be mixed in an upstream step and subsequently be reacted. It is also possible to feed the individual components into a reactor in which they are mixed and then reacted.

The conversion of the reaction mixture (RM1) is generally carried out in the presence of at least one aprotic polar solvent. Suitable solvents are known to the person skilled in the art. In principal, it is possible to use any aprotic polar solvent that is known to the person skilled in the art. Suitable aprotic polar solvents are especially those described above in connection with the conversion of the components (C1) and (C2) to obtain the at least polyarylenesulfone polymer (PS1). Particularly preferred solvents are N-methylpyrrolidone and/or N,N-dimethylacetamide.

The components (A1) and (A2) are preferably at least partially dissolved in the at least one aprotic polar solvent. Preferably at least 60% by weight, more preferably at least 80% by weight of the components (A1) and (A2) are dissolved in the at least one aprotic polar solvent, based on the total weight of the components (A1) and (A2) in the reaction mixture (RM1). Particularly preferably the components (A1) and (A2) are completely dissolved in the at least one aprotic polar solvent.

The term "completely dissolved", in the present case, is understood to mean that preferably not more than 5% by weight, more preferably not more than 3% by weight, particularly preferably not more than 2% by weight and especially preferably not more than 1% by weight of the components (A1) and (A2) are present in the reaction mixture (RM1) as solid particles, based on the total weight of the components (A1) and (A2) in the reaction mixture (RM1). Most preferably, the reaction mixture (RM1) comprises no solid particles of the components (A1) and (A2). Consequently, the components (A1) and (A2) preferably cannot be separated from the reaction mixture (RM1) by means of filtration.

The dissolution of the components (A1) and (A2) in the at least one aprotic polar solvent can be carried out according to any methods known to the person skilled in the art. Preferably, the components (A1) and (A2) are dissolved in the at least one aprotic polar solvent under stirring. The dissolution of the components (A1) and (A2) in the at least one aprotic polar solvent can proceed concurrently or subsequently.

The dissolution of the components (A1) and (A2) in the at least one aprotic polar solvent is preferably carried out at increased temperatures, preferably in the range of 20 to 160°C and especially preferably in the range of 40 to 140°C.

The conversion of the reaction mixture (RM1) can generally be carried out at any temperature. Preferably, the conversion of the reaction mixture (RM1) is carried out at a temperature in the range from 50 to 300°C, preferably in the range from 60 to 200°C and especially preferably in the range from 70 to 140°C.

The duration of step a) may vary between wide limits. The duration of step a) is preferably in the range from 0.2 to 24 hours, more preferably in the range from 0.5 to 12 hours and especially in the range from 1 to 6 hours.

The mixture obtained after the conversion of the reaction mixture (RM1), which comprises the at least one functionalized polyarylenesulfone polymer (PS2), is also referred to as reaction mixture (RM2). Thus, all details given with respect to the reaction mixture (RM2) relate to the mixture that is present after the conversion of the reaction mixture (RM1) in step ai).

The reaction mixture (RM2) comprises at least one functionalized polyarylenesulfone polymer (PS2) having terminal hydroxyalkyl groups and at least one aprotic polar solvent.

The reaction mixture (RM2) preferably comprises from 5 to 60% by weight, more preferably from 10 to 40% by weight and especially preferably from 20 to 30% by weight of the at least one functionalized polyarylenesulfone polymer (PS2) having terminal hydroxyalkyl groups, based on the total weight of the reaction mixture (RM2).

### Step aii)

In step aii), the at least one functionalized polyarylenesulfone polymer (PS2) is separated from the reaction mixture (RM2).

Preferably, the reaction mixture (RM2) is filtered before the at least one functionalized polyarylenesulfone polymer is separated in step aii). The reaction mixture (RM2) is especially preferably filtered prior to step aii), if component (A3) is present in the reaction mixture (RM1) during step ai).

The separation of the at least one functionalized polyarylenesulfone polymer (PS2) from the reaction mixture (RM2) can be performed by any process known to the skilled person, which is suitable to separate the at least one functionalized polyarylenesulfone polymer (PS2) from the at least one aprotic polar solvent present in the reaction mixture (RM2).

For example, the at least one functionalized polyarylenesulfone polymer (PS2) can be precipitated from the reaction mixture (RM2) by addition of a suitable precipitation agent.

Suitable precipitation agents are known to the person skilled in the art and preferably include protic polar solvents such as water, methanol, ethanol, n-propanol, isopropanol, glycerol, ethylene glycol or mixtures thereof.

The present invention accordingly also provides a process for preparing a functionalized polyarylenesulfone polymer (PS2), which comprises the steps of
ai) converting a reaction mixture (RM1), which comprises the components,
   (A1) at least one polyarylenesulfone polymer (PS1) comprising phenolic hydroxy groups,
   (A2) at least one aliphatic alcohol having a halogen substituent,
   (A3) at least one halide salt,
   in the presence of at least one aprotic polar solvent, to obtain a reaction mixture (RM2) comprising the at least one functionalized polyarylenesulfone polymer (PS2) having terminal hydroxyalkyl groups and the at least one aprotic polar solvent,
aii) separating the at least one functionalized polyarylenesulfone polymer (PS2) from the reaction mixture (RM2).

### Step b)

In step b), a reaction mixture (RM3) which comprises the at least one functionalized polyarylenesulfone polymer (PS2) obtained in step aii) as component (B1), at least one dicarboxy compound as component (B2) and at least one aliphatic dihydroxy compound as component (B3) to obtain a reaction mixture (RM4) comprising the polyarylenesulfone/polyester block copolymer (P). The components (B1), (B2) and (B3) are converted in a polycondensation reaction.

Reaction mixture (RM3) is understood to mean the mixture that is used in step b) of the process according to the present invention for preparing the polyarylenesulfone/ polyester block copolymer (P). In the present case, all details given with respect to the reaction mixture (RM3) thus relate to the mixture that is present prior to the polycondensation reaction. The polycondensation reaction takes place during step b) of the process according to the invention, in which the reaction mixture (RM3) reacts by polycondensation reaction of components (B1), (B2) and (B3) to give the target product, the polyarylenesulfone/polyester block copolymer (P).

The person skilled in the art will acknowledge that the polyarylenesulfone segments of the polyarylenesulfone/polyester block copolymer (P) are derived from component (B1) and the polyester segments in the polyarylenesulfone/polyester block copolymer (P) are derived from components (B2) and (B3).

### Component (B1)

The reaction mixture (RM3) comprises the at least one functionalized polyarylenesulfone polymer (PS2) obtained in step aii) of the process according to the invention as component (B1). The terms "at least one functionalized polyarylenesulfone polymer (PS2)", "at least one functionalized polyarylenesulfone polymer (PS2) having terminal hydroxyalkyl groups" and "component (B1)" are used synonymously in the context of the present invention. The term "at least one functionalized polyarylenesulfone polymer (PS2)", in the present case, is understood to mean exactly one functionalized polyarylenesulfone polymer (PS2) and also mixtures of two or more functionalized polyarylenesulfone polymers (PS2).

The at least one functionalized polyarylenesulfone polymer (PS2) obtained in step aii) of the process according to the invention has terminal hydroxyalkyl groups. The term "terminal hydroxyalkyl group", in the present case, is understood to mean a functional group at the end of the chain of a linear polymer, i.e. a functional group at the end of the chain of the at least one functionalized polyarylenesulfone polymer (PS2) which comprises an alkyl moiety having a hydroxy group. The alkyl moiety having a hydroxy group is derived from the at least one aliphatic alcohol having a halogen substituent (component (A2)).

The reaction mixture (RM3) preferably comprises at least 15% by weight, more preferably at least 35% by weight and especially preferably at least 55% by weight of the at least one functionalized polyarylenesulfone polymer (PS2), based on the total weight of the reaction mixture (RM3).

The reaction mixture (RM3) further preferably comprises not more than 98.9% by weight, more preferably not more than 89% by weight and especially preferably not more than 80% by weight of the at least one functionalized polyarylenesulfone polymer (PS2), based on the total weight of the reaction mixture (RM3).

In a preferred embodiment, the reaction mixture (RM3) comprises from 15 to 98.9% by weight, more preferably from 35 to 89% by weight and especially preferably from 55 to 80% by weight of the at least one functionalized polyarylenesulfone polymer (PS2), based on the total weight of the reaction mixture (RM3).

### Component (B2)

The reaction mixture (RM3) comprises at least one dicarboxy compound as component (B2). The terms "at least one dicarboxy compound" and "component (B2)" are used synonymously in the context of the present invention. The term "at least one dicarboxy compound", in the present case, is understood to mean exactly one dicarboxy compound and also mixtures of two or more dicarboxy compounds.

In principle, it is possible to use any dicarboxy compound that is known to the person skilled in the art.

Preferably, component (B2) is at least one dicarboxy compound of the general formula (III) 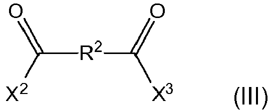 in which
- R²: is selected from the group consisting of unsubstituted or at least monosubstituted C₁-C₁₀-alkanediyl, phenylene, naphthalinediyl, biphenyldiyl and furandiyl, where the substituents are C₁-C₁₀-alkyl,
- X², X³: are each independently selected from the group consisting of OR³, F, Cl and Br, wherein R³ is H, C₁-C₁₀-alkyl or C₁-C₁₀-alkenyl.

The present invention accordingly also provides a process, in which component (B2) is at least one dicarboxy compound of the general formula (III) 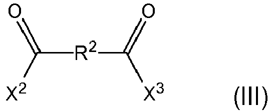 in which
- R²: is selected from the group consisting of unsubstituted or at least monosubstituted C₁-C₁₀-alkanediyl, phenylene, naphthalinediyl, biphenyldiyl and furandiyl,
where the substituents are C₁-C₁₀-alkyl,
- X², X³: are each independently selected from the group consisting of OR³, F, Cl and Br, wherein R³ is H, C₁-C₁₀-alkyl or C₁-C₁₀-alkenyl.

The at least one dicarboxy compound of the general formula (III) comprises two functional groups that are each independently selected from the group consisting of carboxylic acid groups (-CO₂H), carboxylic acid fluorides (-COF), carboxylic acid chlorides (-COCI), carboxylic acid bromides (-COBr), carboxylic acid esters (-CO₂R³; wherein R³ is C₁-C₁₀-alkyl).

R² is selected from the group consisting of unsubstituted or at least monosubstituted C₁-C₁₀-alkanediyl, phenylene, naphthalinediyl, anthracenediyl, biphenyldiyl, diphenylmethanediyl, diphenyletherdiyl, diphenylsulfonediyl and furandiyl. The respective dicarboxy compounds are generally known to the person skilled in the art.

Suitable unsubstituted or at least monosubstituted C₁-C₁₀-alkanediyl groups are selected from the group consisting of methylene, ethylene, propylene, tetramethylene, pentamethylene, hexamethylene, heptamethylene, octamethylene, nonamethylene and decamethylene, preferably propylene, tetramethylene, pentamethylene and hexamethylene. The C₁-C₁₀-alkanediyl groups are preferably unsubstituted. Preferred dicarboxy compounds with a C₁-C₁₀-alkanediyl group as R² include, for example, glutaric acid, glutaryl fluoride, glutaryl chloride, glutaryl bromide, C₁-C₁₀-alkyl esters of glutaric acid, adipic acid, adipoyl fluoride, adipoyl chloride, adipoyl bromide, C₁-C₁₀-alkyl esters of adipic acid, pimelic acid, pimeloyl chloride, pimeloyl bromide, C₁-C₁₀-alkyl esters of pimelic acid, suberic acid, suberoyl fluoride, suberoyl chloride, suberoyl bromide and C₁-C₁₀-alkyl esters of suberic acid.

Suitable unsubstituted or at least monosubstituted phenylene groups are selected from the group consisting of 1,2-phenylene, 1,3-phenylene and 1,4-phenylene, preferably 1,4-phenylene. The phenylene groups are preferably unsubstituted. Preferred dicarboxy compounds with a phenylene group as R² include, for example, isophthalic acid, isophthaloyl fluoride, isophthaloyl chloride, isophthaloyl bromide, C₁-C₁₀-alkyl esters of isophthalic acid, terephthalic acid, terephthaloyl fluoride, terephthaloyl chloride, terephthaloyl bromide and C₁-C₁₀-alkyl esters of terephthalic acid.

Suitable unsubstituted or at least monosubstituted naphthalinediyl groups are selected from the group consisting of naphthaline-1,4-diyl, naphthaline-1,5-diyl, naphthaline-2,6-diyl and naphthaline-2,7-diyl, preferably naphthaline-2,6-diyl. The naphthalinediyl groups are preferably unsubstituted. Preferred dicarboxy compounds with a naphthalinediyl group as R² include, for example, naphthaline-1,4-dicarboxylic acid, naphthaline-1,4-dicarboxylic acid fluoride, naphthaline-1,4-dicarboxylic acid chloride, naphthaline-1,4-dicarboxylic acid bromide, C₁-C₁₀-alkyl esters of naphthaline-1,4-dicarboxylic acid, naphthaline-2,6-dicarboxylic acid, naphthaline-2,6-dicarboxylic acid fluoride, naphthaline-2,6-dicarboxylic acid chloride, naphthaline-2,6-dicarboxylic acid bromide and C₁-C₁₀-alkyl esters of naphthaline-2,6-dicarboxylic acid.

Suitable unsubstituted or at least monosubstituted biphenyldiyl groups are selected from the group consisting of biphenyl-3,3'-diyl and biphenyl-4,4'-diyl, preferably biphenyl-4,4'-diyl. The biphenyldiyl groups are preferably unsubstituted. Preferred dicarboxy compounds with a biphenyldiyl group as R² include, for example, biphenyl-4,4'-dicarboxylic acid, biphenyl-4,4'-dicarboxylic acid fluoride, biphenyl-4,4'-dicarboxylic acid chloride, biphenyl-4,4'-dicarboxylic acid bromide and C₁-C₁₀-alkyl esters of biphenyl-4,4'-dicarboxylic acid.

Suitable unsubstituted or at least monosubstituted furandiyl groups are selected from the group consisting of furan-2,5-diyl. The furandiyl groups are preferably unsubstituted. Preferred dicarboxy compounds with a furandiyl group as R² include, for example, furan-2,5-dicarboxylic acid, furan-2,5-dicarboxylic acid fluoride, furan-2,5-dicarboxylic acid chloride, furan-2,5-dicarboxylic acid bromide and C₁-C₁₀-alkyl esters of furan-2,5-dicarboxylic acid.

Preferably, R² is selected from the group consisting of unsubstituted or at least monosubstituted propylene, tetramethylene, pentamethylene, hexamethylene, 1,3-phenylene, 1,4-phenylene, naphthaline-1,4-diyl, naphthaline-2,6-diyl, biphenyl-4,4'-diyl and furan-2,5-diyl. These groups are preferably unsubstituted.

The term "unsubstituted", in the present case, is understood to mean that R² comprises no further substituents aside from the groups -COX¹ and -COX² depicted in general formula (III) and aside from hydrogen.

The term "at least monosubstituted", in the present case, is understood to mean that R² comprises exactly one, two or more than two substituents in addition to the groups -COX¹ and -COX² depicted in general formula (III).

Preferred C₁-C₁₀-alkyl groups include linear and branched, saturated alkyl groups of 1 to 10 carbon atoms. The following moieties are suitable in particular: C₁-C₆-alkyl, such as methyl, ethyl, n-propyl, i-propyl, n-butyl, sec-butyl, 2- or 3-methylpentyl or comparatively long-chain moieties such as heptyl, octyl, nonyl, decyl, undecyl, lauryl and the branched analogs thereof. Further preferred C₁-C₁₀-alkyl groups also include C₃-C₁₀-cycloalkyl moieties, e.g. cyclopropyl, cyclobutyl, cyclopentyl, cyclohexyl, cycloheptyl, cyclooctyl, cyclopropylmethyl, cyclopropylethyl, cyclopropylpropyl, cyclobutylmethyl, cyclobutylethyl, cyclopentylethyl, cyclopentylpropyl, cyclopentylbutyl, cyclopentylpentyl, cyclohexylmethyl, cyclohexyldimethyl or cyclohexyltrimethyl.

Preferred C₁-C₁₀-alkenyl groups include linear and branched, at least mono-unsaturated alkyl groups of 1 to 10 carbon atoms. Particularly preferred C₁-C₁₀-alkenyl groups include vinyl, allyl, isopropenyl, 1-butenyl, crotyl, 3-butenyl, 1,3-butadienyl or comparatively long-chain moieties such as pentenyl, pentadienyl, hexenyl, hexadienyl, hexatrienyl, heptenyl, heptadienyl, heptatrienyl, octenyl, octadienyl, octatrienyl, octatetraenyl, nonenyl, nonadienyl, nonatrienyl, nonatetradienyl, decenyl, decadienyl, decatrienyl, decatetraenyl or decapentaenyl and the branched analogs thereof.

Preferably, component (B2) comprises at least 50% by weight based on the total weight of the component (B2), of at least one dicarboxy compound selected from the group consisting of terephthalic acid, dimethyl terephthalate, diethyl terephthalate, terephthaloyl dichloride and terephthaloyl dibromide.

The present invention accordingly also provides a process, in which component (B2) comprises at least 50% by weight, based on the total weight of the component (B2), of at least one dicarboxy compound selected from the group consisting of terephthalic acid, dimethyl terephthalate, diethyl terephthalate, terephthaloyl dichloride and terephthaloyl dibromide.

In a particularly preferred embodiment, component (B2) comprises at least 80% by weight, more preferably 90% by weight and especially preferably at least 98% by weight of at least one dicarboxy compound selected from the group consisting of terephthalic acid, dimethyl terephthalate, diethyl terephthalate, terephthaloyl dichloride and terephthaloyl dibromide, based on the total weight of component (B2) in the reaction mixture (RM3).

In a further particularly preferred embodiment, component (B2) consists essentially of at least one dicarboxy compound selected from the group consisting of terephthalic acid, dimethyl terephthalate, diethyl terephthalate, terephthaloyl dichloride and terephthaloyl dibromide.

The term "consisting essentially of" in the present case is understood to mean that component (B2) comprises more than 99% by weight, preferably more than 99.5% by weight and particularly preferably more than 99.9% by weight of at least one dicarboxy compound selected from the group consisting of terephthalic acid, dimethyl terephthalate, diethyl terephthalate, terephthaloyl dichloride and terephthaloyl dibromide, based in each case on the total weight of component (B2) in the reaction mixture (RM3). In these embodiments, dimethyl terephthalate is particularly preferred as component (B2).

In a further particularly preferred embodiment, component (B2) consists of dimethyl terephthalate.

The reaction mixture (RM3) preferably comprises at least 1% by weight, more preferably at least 10% by weight and especially preferably at least 15% by weight of the at least one dicarboxy compound, based on the total weight of the reaction mixture (RM3).

The reaction mixture (RM3) further preferably comprises not more than 45% by weight, more preferably not more than 35% by weight and especially preferably not more than 25% by weight of the at least one dicarboxy compound, based on the total weight of the reaction mixture (RM3).

In a preferred embodiment, the reaction mixture (RM3) comprises from 1 to 45% by weight, more preferably from 10 to 35% by weight and especially preferably from 15 to 25% by weight of the at least one dicarboxy compound, based on the total weight of the reaction mixture (RM3).

### Component (B3)

The reaction mixture (RM3) comprises at least one aliphatic dihydroxy compound as component (B3). The terms "at least one aliphatic dihydroxy compound" and "component (B3)" are used synonymously in the context of the present invention. The term "at least one aliphatic dihydroxy compound" in the present case is understood to mean exactly one aliphatic dihydroxy compound and also mixtures of two or more aliphatic dihydroxy compounds. The at least one aliphatic dihydroxy compound comprises exactly two hydroxy groups.

In principle, it is possible to use any aliphatic dihydroxy compound that is known to the person skilled in the art.

Suitable aliphatic dihydroxy compounds include alcohols having 1 to 10 carbon atoms and two hydroxy groups. Particularly preferred aliphatic dihydroxy compounds include ethylene glycol, diethylene glycol, triethylene glycol, 1,3-propanediol, 1,4-butanediol, 2-methyl-1,3-propanediol, 1,5-pentandiol, neopentyl glycol, 1,6-hexanediol, 2,2,4,4-tetramethyl-1,3-cyclobutanediol and 1,4-cyclohexanedimethanol.

Preferably, component (B3) comprises at least 50% by weight, based on the total weight of the component (B3) of at least one aliphatic dihydroxy compound selected from the group consisting of ethylene glycol, diethylene glycol, triethylene glycol, 1,3-propanediol, 1,4-butanediol, 2-methyl-1,3-propanediol, 1,5-pentandiol, neopentyl glycol, 1,6-hexanediol, 2,2,4,4-tetramethyl-1,3-cyclobutanediol and 1,4-cyclohexanedimethanol.

The present invention accordingly also provides a process, in which component (B3) comprises at least 50% by weight, based on the total weight of the component (B3), of at least one aliphatic dihydroxy compound selected from the group consisting of ethylene glycol, diethylene glycol, triethylene glycol, 1,3-propanediol, 1,4-butanediol, 2-methyl-1,3-propanediol, 1,5-pentandiol, neopentyl glycol, 1,6-hexanediol, 2,2,4,4-tetramethyl-1,3-cyclobutanediol and 1,4-cyclohexanedimethanol.

In a particularly preferred embodiment, component (B3) comprises at least 80% by weight, more preferably at least 90% by weight and especially preferably at least 98% by weight of at least one aliphatic dihydroxy compound selected from the group consisting of ethylene glycol, diethylene glycol, triethylene glycol, 1,3-propanediol, 1,4-butanediol, 2-methyl-1,3-propanediol, 1,5-pentandiol, neopentyl glycol, 1,6-hexanediol, 2,2,4,4-tetramethyl-1,3-cyclobutanediol and 1,4-cyclohexanedimethanol, based on the total weight of component (B3) in the reaction mixture (RM3).

In a further particularly preferred embodiment, component (B3) consists essentially of at least one aliphatic dihydroxy compound selected from the group consisting of ethylene glycol, diethylene glycol, triethylene glycol, 1,3-propanediol, 1,4-butanediol, 2-methyl-1,3-propanediol, 1,5-pentandiol, neopentyl glycol, 1,6-hexanediol, 2,2,4,4-tetramethyl-1,3-cyclobutanediol and 1,4-cyclohexanedimethanol.

The term "consisting essentially of" in the present case is understood to mean that component (B3) comprises more than 99% by weight, preferably more than 99.5% by weight and particularly preferably more than 99.9% by weight of at least one aliphatic dihydroxy compound selected from the group consisting of ethylene glycol, diethylene glycol, triethylene glycol, 1,3-propanediol, 1,4-butanediol, 2-methyl-1,3-propanediol, 1,5-pentandiol, neopentyl glycol, 1,6-hexanediol, 2,2,4,4-tetramethyl-1,3-cyclobutane-diol and 1,4-cyclohexanedimethanol, based in each case on the total weight of component (B3) in the reaction mixture (RM3). In these embodiments, ethylene glycol, 1,3-propanediol, 4-butanediol and 1,5-pentanediol are particularly preferred as component (B3), while 1,4-butanediol is most preferred.

In a further particularly preferred embodiment, component (B3) consists of at least one aliphatic dihydroxy compound selected from the group consisting of ethylene glycol, diethylene glycol, triethylene glycol, 1,3-propanediol, 1,4-butanediol, 2-methyl-1,3-propanediol, 1,5-pentandiol, neopentyl glycol, 1,6-hexanediol, 2,2,4,4-tetramethyl-1,3-cyclobutanediol and 1,4-cyclohexanedimethanol.

In a further particularly preferred embodiment, component (B3) consists of 1,4-butanediol.

The reaction mixture (RM3) preferably comprises at least 0.1% by weight, more preferably at least 1% by weight and especially preferably at least 5% by weight of the at least one aliphatic dihydroxy compound, based on the total weight of the reaction mixture (RM3).

The reaction mixture (RM3) further preferably comprises not more than 40% by weight, more preferably not more than 30% by weight and especially preferably not more than 20% by weight of the at least one aliphatic dihydroxy compound, based on the total weight of the reaction mixture (RM3).

In a preferred embodiment, the reaction mixture (RM3) comprises from 0.1 to 40% by weight, more preferably from 1 to 30% by weight and especially preferably from 5 to 20% by weight of the at least one aliphatic dihydroxy compound, based on the total weight of the reaction mixture (RM3).

The conversion of the reaction mixture (RM3) is preferably carried out in the absence of any solvents and is preferably carried out as a melt condensation polymerization. Thus, the reaction conditions are preferably chosen accordingly for effecting the polycondensation reaction between the components (B1), (B2) and (B3) under melt conditions.

The melting of the components (B1), (B2) and (B3) is preferably carried out under stirring and may be effected concurrently or in succession.

The conversion of the reaction mixture (RM3) can be carried out batchwise in any reaction vessel or, alternatively, batchwise or continuously in a reactor suitable for mixing high-viscosity materials and allowing removal of gaseous condensation products and which is also capable of heating the components (B1), (B2) and (B3) above their melting point. Preferred reactors are extruders or mixing kneaders, particular preference being given to mixing kneaders. Preference is also given to single- or twin-shaft kneaders, particular preference being given to twin-shaft kneaders.

It is further preferable that the reaction vessel or reactor is additionally equipped with a reflux condenser in order to recycle components (B2) and/or (B3), which may have evaporated at the reaction temperatures into the reaction vessel or reactor.

Typically, the conversion of the reaction mixture (RM3) is conducted at a temperature below the decomposition temperature of the components (B1), (B2) and (B3). Preferably, the temperature during the condensation reaction is at least 1°C, preferably at least 5°C and especially preferably at least 10°C below the decomposition temperature of the component having the lowest decomposition temperature among components in the reaction mixture (RM3).

In general, the conversion of the reaction mixture (RM3) is conducted at a temperature in the range from 160 to 400 °C, preferably in the range from 200 to 350 °C.

The duration of step b) may vary between wide limits. The duration of step b) is preferably in the range from 0.5 to 8 hours, more preferably in the range from 1 to 6 hours and especially in the range from 2 to 5 hours.

The conversion of the reaction mixture (RM3) in step b) can be generally be carried out at any pressures. Preferably, the conversion of the reaction mixture (RM3) in step b) is carried out under reduced pressures, more preferably in the range from 0.01 to 0.5 mbar, especially preferably in the range from 0.05 to 0.3 mbar and most preferably in the range from 0.1 to 0.2 mbar.

In a preferred embodiment, the conversion of the reaction mixture (RM3) in step b) is carried out at a temperature in the range from 160 to 400°C and a pressure in the range from 0.01 to 0.5 mbar and more preferably at a temperature in the range from 200 to 350°C and a pressure in the range from 0.05 to 0.3 mbar.

In a particularly preferred embodiment, the conversion of the reaction mixture (RM3) in step b) is carried out at different temperatures and pressures. The conversion of the reaction mixture (RM3) in step b) is then first carried out at a temperature in the range from 160 to 250°C and a pressure in the range from 0.9 to 1.2 bar and, after at least 1%, preferably at least 15% and more preferably at least 30% of the total reaction time of step b) has passed, the temperature is adjusted to be in the range from 250 to 270°C and the pressure is adjusted to be in the range from 0.01 to 0.5 mbar.

During the conversion of the reaction mixture (RM3) in step b) of the process according to the invention, volatile by-products can form which are preferably separated from the reaction mixture (RM3) during the conversion in step b).

The term "volatile by-products", in the present case, is understood to mean components formed during the conversion of the reaction mixture (RM3) which have a boiling point below 180 °C, preferably below 160 °C and especially preferably below 140 °C. Preferred volatile by-products include for example water (reaction water), alcohols or hydrogen halides. The separation of the volatile by-products can be carried out according to all methods known to the person skilled in the art. In a preferred embodiment, the volatile by-products are removed from the reaction mixture (RM3) during step b) via distillation, optionally under a continuous nitrogen stream and optionally under reduced pressures.

The reaction mixture (RM3) may further comprise at least one esterification catalyst as component (B4). The terms "at least one esterification catalyst" and "component (B4)" are used synonymously in the context of the present invention. The term "at least one esterification catalyst", in the present case, is understood to mean exactly one esterification catalyst and also mixtures of two or more esterification catalysts.

The at least one esterification catalyst is preferably selected from the group consisting of titanium(IV) hydroxides, titanium(IV) carboxylates, titanium(IV) alkoxides, titanium(IV) hydroxyalkoxides, titanium(IV) aminoalkoxides, titanium(IV) halides, aluminum(III) hydroxides, aluminum(III) carboxylates, aluminum(III) alkoxides, aluminum(III) hydroxyalkoxides, aluminum(III) aminoalkoxides, aluminum(III) halides, silicon(IV) hydroxides, silicon(IV) carboxylates, silicon(IV) alkoxides, silicon(IV) hydroxyalkoxides, silicon(IV) aminoalkoxides, silicon(IV) halides, germanium(IV) hydroxides, germanium(IV) carboxylates, germanium(IV) alkoxides, germanium(IV) hydroxyalkoxides, germanium(IV) aminoalkoxides, germanium(IV) halides, tin(IV) hydroxides, tin(IV) carboxylates, tin(IV) alkoxides, tin(IV) hydroxyalkoxides, tin(IV) aminoalkoxides, tin(IV) halides, lead(IV) hydroxides, lead(IV) carboxylates, lead(IV) alkoxides, lead(IV) hydroxyalkoxides, lead(IV) aminoalkoxides, lead(IV) halides, arsenic(III) hydroxides, arsenic(III) carboxylates, arsenic(III) alkoxides, arsenic(III) hydroxyalkoxides, arsenic(III) aminoalkoxides, arsenic(III) halides, antimony(III) hydroxides, antimony(III) carboxylates, antimony(III) alkoxides, antimony(III) hydroxyalkoxides, antimony(III) aminoalkoxides, antimony(III) halides, bismuth(III) hydroxides, bismuth(III) carboxylates, bismuth(III) alkoxides, bismuth(III) hydroxyalkoxides, bismuth(III) aminoalkoxides and bismuth(III) halides.

The present invention accordingly also provides a process, in which the reaction mixture (RM3) further comprises at least one esterification catalyst as component (B4) selected from the group consisting of titanium(IV) hydroxides, titanium(IV) carboxylates, titanium(IV) alkoxides, titanium(IV) hydroxyalkoxides, titanium(IV) aminoalkoxides, titanium(IV) halides, aluminum(III) hydroxides, aluminum(III) carboxylates, aluminum(III) alkoxides, aluminum(III) hydroxyalkoxides, aluminum(III) aminoalkoxides, aluminum(III) halides, silicon(IV) hydroxides, silicon(IV) carboxylates, silicon(IV) alkoxides, silicon(IV) hydroxyalkoxides, silicon(IV) aminoalkoxides, silicon(IV) halides, germanium(IV) hydroxides, germanium(IV) carboxylates, germanium(IV) alkoxides, germanium(IV) hydroxyalkoxides, germanium(IV) aminoalkoxides, germanium(IV) halides, tin(IV) hydroxides, tin(IV) carboxylates, tin(IV) alkoxides, tin(IV) hydroxyalkoxides, tin(IV) aminoalkoxides, tin(IV) halides, lead(IV) hydroxides, lead(IV) carboxylates, lead(IV) alkoxides, lead(IV) hydroxyalkoxides, lead(IV) aminoalkoxides, lead(IV) halides, arsenic(III) hydroxides, arsenic(III) carboxylates, arsenic(III) alkoxides, arsenic(III) hydroxyalkoxides, arsenic(III) aminoalkoxides, arsenic(III) halides, antimony(III) hydroxides, antimony(III) carboxylates, antimony(III) alkoxides, antimony(III) hydroxyalkoxides, antimony(III) aminoalkoxides, antimony(III) halides, bismuth(III) hydroxides, bismuth(III) carboxylates, bismuth(III) alkoxides, bismuth(III) hydroxyalkoxides, bismuth(III) aminoalkoxides and bismuth(III) halides.

Particularly preferred compounds as component (B4) are selected from the group consisting of titanium(IV) hydroxides, titanium(IV) alkoxides, titanium(IV) hydroxyalkoxides, titanium(IV) aminoalkoxides and titanium(IV) halides.

If the reaction mixture (RM3) comprises at least one esterification catalyst as component (B4), the reaction mixture (RM3) preferably comprises 1 to 1000 ppm, more preferably 10 to 500 ppm and especially preferably 50 to 100 ppm of component (B4), based on the total molar amount of components (B1), (B2) and (B3) in the reaction mixture (RM3).

The reaction mixture (RM4) is the mixture which is obtained after the conversion of the reaction mixture (RM3) in step b) and comprises the polyarylenesulfone/polyester block copolymer (P). All particulars herein in relation to the reaction mixture (RM4) thus relate to the mixture which is present after the polycondensation reaction.

The reaction mixture (RM4) preferably comprises at least 80% by weight, more preferably at least 90% by weight and especially preferably at least 99% by weight of the polyarylenesulfone/polyester block copolymer (P), based on the total weight of the reaction mixture (RM4).

In a preferred embodiment, the reaction mixture (RM4) consists essentially of the polyarylenesulfone/polyester block copolymer (P). The term "consisting essentially of", in the present case, is understood to mean that the reaction mixture (RM4) comprises at least 99% by weight, preferably at least 99.5% by weight, particularly preferably at least 99.9% by weight of the polyarylenesulfone/polyester block copolymer (P), based in each case on the total weight of the reaction mixture (RM4).

If desired, the polyarylenesulfone/polyester block copolymer (P) can be separated from the reaction mixture (RM4) according to all methods known by the person skilled in the art. Preferably, however, the polyarylenesulfone/polyester block copolymer (P) is not separated from the reaction mixture (RM4) and requires no further purification.

### Polyarylenesulfone/polyester block copolymer (P)

The polyarylenesulfone/polyester block copolymer (P) is obtained by the inventive process.

The polyarylenesulfone/polyester block copolymer (P) preferably comprises at least 30% by weight, based on the total weight of the polyarylenesulfone/polyester block copolymer (P), of units of the general formula (I) 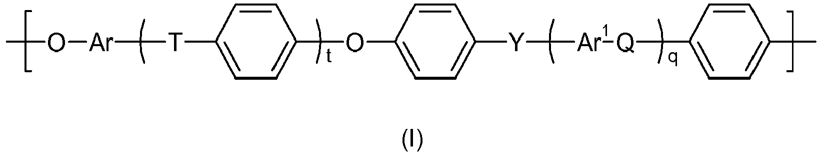 in which
- t, q: are each independently 0, 1, 2 or 3,
- Q, T, Y: are each independently a chemical bond or group selected from -O-, -S-,-SO₂-, S=O, C=O, -N=N-, -CR^{a}R^{b}- where R^{a} and R^{b} are each independently a hydrogen atom or a C₁-C₁₀-alkyl, C₁-C₁₀-alkoxy or C₆-C₁₈-aryl group, where at least one of Q, T and Y is not -O-, and at least one of Q, T and Y is -SO₂-, and
- Ar, Ar¹: are each independently an arylene group having from 6 to 18 carbon atoms.

The present invention further provides a polyarylenesulfone/polyester block copolymer (P), which comprises at least 30% by weight, based on the total weight of the polyarylenesulfone/polyester block copolymer (P), of units of the general formula (I) 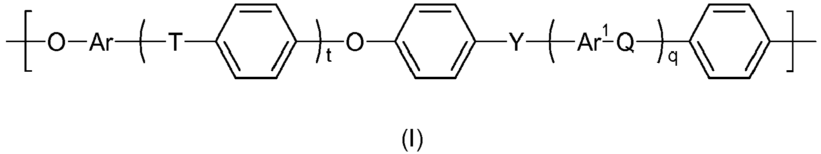 in which
- t, q: are each independently 0, 1, 2 or 3,
- Q, T, Y: are each independently a chemical bond or group selected from -O-, -S-,-SO₂-, S=O, C=O, -N=N-, -CR^{a}R^{b}- where R^{a} and R^{b} are each independently a hydrogen atom or a C₁-C₁₀-alkyl, C₁-C₁₀-alkoxy or C₆-C₁₈-aryl group, where at least one of Q, T and Y is not -O-, and at least one of Q, T and Y is -SO₂-, and
- Ar, Ar¹: are each independently an arylene group having from 6 to 18 carbon atoms.

More preferably, the polyarylenesulfone/polyester block copolymer (P) comprises at least 50% by weight, based on the total weight of the polyarylenesulfone/polyester block copolymer (P), of units of the general formula (I).

The polyarylenesulfone/polyester block copolymer (P) preferably comprises not more than 90% by weight, more preferably not more than 80% by weight, based on the total weight of the polyarylenesulfone/polyester block copolymer (P), of units of the general formula (I).

Likewise, the polyarylenesulfone/polyester block copolymer (P) preferably comprises at least 10% by weight and more preferably at least 20% by weight, based on the total weight of the polyarylenesulfone/polyester block copolymer (P), of polyester segments.

The polyarylenesulfone/polyester block copolymer (P) also preferably comprises not more than 70% by weight and more preferably not more than 50% by weight, based on the total weight of the polyarylenesulfone/polyester block copolymer (P), of polyester segments.

In a preferred embodiment, the polyarylenesulfone/polyester block copolymer (P) comprises from 30 to 90% by weight and more preferably from 50 to 80% by weight of units of the general formula (I) and from 10 to 70% by weight and more preferably from 20 to 50% by weight of polyester segments, each based on the total weight of the polyarylenesulfone/polyester block copolymer (P)

The units of the general formula (I) in the polyarylenesulfone/polyester block copolymers (P) preferably have a number-average molecular weight (Mₙ) of at least 3,000 g/mol, more preferably at least 5,000 g/mol, especially at least 8,000 g/mol and most preferably at least 10,000 g/mol, as determined by gel permeation chromatography (GPC).

The present invention accordingly also provides a a polyarylenesulfone/polyester block copolymer (P), in which the units of the general formula (I) have an number-average molecular weight (Mₙ) of at least 8,000 g/mol, as determined by gel permeation chromatography (GPC).

In a preferred embodiment, at least 30% by weight, preferably at least 50% by weight, more preferably at least 80% by weight and especially preferably at least 98% by weight of the polyarylenesulfone segments in the polyarylenesulfone/polyester block copolymer (P), based on the total weight of polyarylenesulfone segments in the polyarylenesulfone/polyester block copolymer (P), comprise units of the formula (Ik):

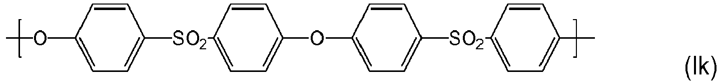

In a further preferred embodiment, the polyarylenesulfone segments in the polyarylenesulfone/polyester block copolymer (P) essentially consist of units of the formula (Ik). The term "consist essentially of", in the present case, is understood to mean that the polyarylenesulfone segments in the polyarylenesulfone/polyester block copolymer (P) comprise at least 99% by weight, preferably at least 99.5% by weight and particularly preferably at least 99.9% by weight of units of the formula (Ik).

In a further particularly preferred embodiment, the polyarylenesulfone segments in the polyarylenesulfone/polyester block copolymer (P) consist of units of the formula (Ik).

In these embodiments, the units of the formula (Ik) preferably have a number-average molecular weight (Mₙ) of at least 3,000 g/mol, more preferably at least 5,000 g/mol, especially at least 8,000 g/mol and most preferably at least 10,000 g/mol, as determined by gel permeation chromatography (GPC).

The aforementioned preferences for units of the formula (I) in the polyarylenesulfone/polyester block copolymer (P) generally also apply for units of the formula (Ik).

The polyarylenesulfone/polyester block copolymers (P) comprise on average one to two polyester blocks and one polyarylenesulfone block. The polyarylenesulfone/ polyester block copolymers (P) preferably comprise on average two polyester blocks and one polyarylenesulfone block.

The polyarylenesulfone/polyester block copolymers (P) obtained according to the invention have high glass transition temperatures (T_{g}). Methods to determine the glass transition temperature (T_{g}) are described below.

The present invention is more particularly elucidated by the following examples without being restricted thereto.

### Components used:

| | |
|---|---|
| DCDPS: | 4,4'-dichlorodiphenylsulfone (component (C1)) |
| DHDPS: | 4,4'-dihydroxydiphenylsulfone (component (C2)) |
| 2-chloroethanol | (component (A2)) |
| DMT: | dimethylterephthalate (component (B2)) |
| 1,4-BD: | 1,4-butanediol (component (B3)) |
| potassium carbonate: | K₂CO₃, anhydrous |
| DMAc: | N,N-dimethylacetamide, anhydrous |
| potassium iodide: | KI (component (A3)) |
| titanium tetraisopropoxide: | Ti(O*i*Pr)₄ (component (B4)) |

The characterization of the at least one functionalized polyarylenesulfone polymer (PS2) and of the polyarylenesulfone/polyester copolymer (P) was carried out by means of ¹H NMR spectroscopy, differential scanning calorimetry (DSC) and dynamic mechanical analysis (DMA).

The ¹H NMR measurements utilized a Varian Unity 400 spectrometer operating at 400 MHz and at 23°C in deuterated CDCl₃ or in a 9:1 (v:v) mixture of CDCl₃ and CF₃COOD. The chemical shrift *δ* was referenced against tetramethylsilane and is given in ppm. The types of signals observed in the ¹H NMR spectra are singulets (s), doublets (d), triplets (t), quartets (q), multiplets (m) and broad signals.

The measurements of the glass transition temperature (T_{g}) via DSC were carried out in a DSC Q2000 under nitrogen atmosphere in heat/cool/heat cycles of 10°C/min, 100°C/min and 10°C/min, respectively. For each measurement, approximately 5 mg of the substance were sealed in an aluminum crucible. In the first heating run, the samples are heated to 250°C, then rapidly cooled to -100°C and then in the second heating run, heated to 250°C. The respective T_{g} value is determined from the second heating run.

Dynamic mechanical analysis (DMA) revealed modulus versus temperature behavior using a DMA Q800 in oscillatory tension mode at 1 Hz and 3 °C/min.

### Example 1

### Synthesis of the functionalized polyarylenesulfone polymer (PS2); hydroxyethyl-terminated polyethersulfone

DCDPS (57.012 g, 0.198 mol), DHDPS (53.879 g, 0.2153 mol), potassium carbonate (89.26 g, 0.646 mol), toluene (230 mL) and anhydrous DMAc (475 mL) are charged to a 1000 mL, three-necked, round-bottomed flask. Purging the flask prior to heating to 160°C for 30 min with N₂ ensures an inert atmosphere. The collection of water in a Dean-Stark trap under toluene reflux monitors the polycondensation progress. Once water collection stops, the reaction temperature is slowly increased to 185°C with the removal of toluene, and the reaction proceeds under these conditions for 12 h. The resulting green, heterogeneous solution is then cooled to 130°C and 2-chloroethanol (5.032 g, 0.0625 mol) and potassium iodide (1.04 g, 0.00625 mol) are added directly into the reaction flask to form a reaction mixture (RM1). The reaction mixture (RM1) is kept at 130°C for 1 hour, resulting in a pale yellow solution of reaction mixture (RM2). The reaction mixture (RM2) is then cooled to room temperature and filtered to remove undesired salts. Dropwise addition of the reaction mixture (RM2) into 4 L of a water/methanol solution yields the functionalized polyarylenesulfone polymer (PS2) as a solid precipitate, which was filtered and dried in vacuo at 180°C overnight.
¹H NMR (400 MHz, CDCl₃) *δ* = 7.95 and 7.24 (m, *-*O*-Ar-*SO₂-), 4.87 (t, *-*O*H*), 4.02 (t, HO*-CH₂*-), 3.67 (q, HO-CH₂-*CH₂*-).
T_{g} = 202 °C

### Example 2

A series of experiments was conducted according to Example 1, but at different reaction temperatures and with or without the addition of potassium iodide (component (A3)). The results of these experiments are shown in Table 1.The term "Y" in Table 1 is understood to mean that the specified component is present in the reaction mixture (RM1) or in the reaction mixture (RM2), while the term "N" indicates that none of the specified components are present in the respective reaction mixture.

**Table 1**

| **KI in (RM1)** | **Time (h)** | **Solvent** | **Temperature (°C)** | **Conversion (%)** | **Side Products in (RM2)** |
|---|---|---|---|---|---|
| N | 24 | DMAc | 25 | 0 | Y |
| N | 24 | DMAc | 65 | 7.4 | Y |
| N | 24 | DMAc | 85 | 8.3 | Y |
| N | 24 | DMAc | 120 | 39 | Y |
| Y | 1 | DMAc | 120 | >99 | N |
| Y | 24 | DMAc | 120 | >99 | Y |

The examples in Table 1 clearly show that low reaction temperatures result in poor conversions. The presence of potassium iodide in the reaction mixture (RM1) significantly reduces the required reaction time, reduces the formation of side products and results in very high conversions above 99%.

### Example 3

### Synthesis of the polyarylenesulfone/polyester block copolymer (P); polyethersulfone-poly(butylene terephthalate) block copolymer

A reaction mixture (RM3) comprising 13.2 g of the functionalized polyarylenesulfone polymer (PS2) obtained according to Example 1, 1,4-butanediol (1.6 g, 0.018 mol), and dimethyl terephthalate (2.91 g, 0.015 mol) is charged to a dry, 100 mL, round-bottomed flask. Titanium tetraisopropoxide (100 ppm) is added to facilitate the condensation reaction. The flask is equipped with an overhead stir rod, nitrogen inlet, and condenser. Three cycles of sequential degassing under vacuum followed by a nitrogen purge ensure an inert atmosphere for polymerization. Under a constant nitrogen purge, the reaction proceeds at sequential temperature steps from 220 to 250°C over 2.5 h. The pressure is then subsequently reduced (> 0.1 mmHg) and the temperature raised to 270°C for an additional 2 h. The resulting polyarylenesulfone/polyester copolymer (P) is isolated directly without further purification and comprises approximately 80% by weight of polyethersulfone segments and 20% by weight of poly(butylene terephthalate) segments.
¹H NMR (400 MHz, 9:1 v:v mixture of CDCl₃ and CF₃COOD):
poly(butylene terephthalate) segment: 5 = 8.11 (s, H₂C-O₂C-*Ar*-CO₂-CH₂), 4.49 (broad, *-*O*-CH₂-*CH₂-CH₂-*CH₂*-O-)*,* 2.02 (broad, -O-CH₂*-CH₂-CH₂-*CH₂-O-);
polyethersulfone segment: *δ* = 7.95 ppm and 7.15 ppm (m, -O-*Ar*-SO₂-)
T_{g} = 177 °C

### Example 4

Table 4 shows the thermal characterization of different polyarylene/polyester block copolymers prepared according to Example 3, but with different number-average molecular weights and different weight ratios of polyethersulfone segments (PESu) to poly(butylene terephthalate) segments (PBT). The nomenclature for the copolymer follows xPESu_{y}-zPBT, where x and z report the weight percent of polyethersulfone segments and poly(butylene terephthalate) segments, respectively, and y describes the number-average molecular weight (Mₙ) of the polyethersulfone segments in g/mol. For example, the term 80PESu_{3,000}-20PBT refers to a polymer comprising 80% by weight of polyethersulfone segments having a number-average molecular weight of 3,000 g/mol and 20% by weight of poly(butylene terephthalate) segments.

**Table 2**

| | | **DSC^{a}** | | **DMA^{b}** | | **Crystallinity^{d}** |
|---|---|---|---|---|---|---|
| | **Mₙ (PESu) = 3,000 g/mol** | ***T*_{g}** (**°C**) | ***T*ₘ (°C)** | ***T*_{g} (°C)** | ***T*_{f} (°C)** | **%** |
| E1 | 80PESu_{3,000}-20PBT | 155 | N/A | N/A | N/A | 0 |
| E2 | 60PESu_{3,000}-40PBT | 111 | N/A | 124 | 162 | 0 |
| E3 | 40PESu_{3,000}-60PBT | 80 | 207 | 89 | 206 | 2.78 |
| E4 | 20PESu_{3,000}-80PBT | 76 | 217 | 62 | 216 | 23.6 |

| | **Mₙ (PESu) = 8,000 g/mol** | | | | | |
|---|---|---|---|---|---|---|
| E5 | 80PESu_{8,000}-20PBT | 172 | N/A | 177 | 218 | 0 |
| E6 | 60PESu_{8,000}-40PBT | 157 | 219 | 42, 152 | 199 | 6.6 |
| E7 | 50PESu_{8,000}-50PBT | 160 | 217 | 51, 156 | 198 | 11.4 |
| E8 | 20PESu_{8,000}-80PBT | 59 | 222 | 53, 175 | 208 | 21.4 |

| | **Mₙ (PESu) = 10,000 g/mol** | | | | | |
|---|---|---|---|---|---|---|
| E9 | 80PESu_{10,000}-20PBT | 168 | N/A | 161 | 220 | 0 |
| E10 | 60PESU_{10,000}-40PBT | 162 | 217 | 83, 159 | 205 | 7.1 |
| E11 | 50PESu_{10,000}-50PBT | 166 | 220 | 70, 165 | 205 | 11.6 |
| E12 | 40PESu_{10,000}-60PBT^{c} | 65 | 220 | 68, 173 | 205 | 13.7 |
| E13 | 20PESu_{10,000}-80PBT^{c} | 55 | 222 | 68, 159 | 215 | 20.5 |

| | **Mₙ (PESu) = 13,000 g/mol** | | | | | |
|---|---|---|---|---|---|---|
| E14 | 90PESu_{13,000}-10PBT | 197 | N/A | 45, 206 | 246 | 0 |
| E15 | 80PESu_{13,000}-20PBT | 179 | 219 | 48, 176 | 201 | 1.64 |
| E16 | 50PESu_{,000}-50PBT^{c} | 57 | 221 | 65, 184 | 205 | 13.4 |
| E17 | 20PESu_{13,000}-80PBT^{c} | 56 | 222 | 68, 195 | 212 | 22.7 |

| | | | | | | |
|---|---|---|---|---|---|---|
| ^{a} DSC: heat/cool/heat, second heat; N₂, 10 °C/min. *T*_{g} reported as inflection point of step transition, *T*ₘ reported as peak maximum of endothermic event. ^{b} DMA: tension mode, 1 Hz, 3 °C/min. *T*_{g} reported as peak maximum in tan delta curve, *T*_{f} reported as temperature just prior to inconsistent data. ^{c} Melt heterogeneity observed during bulk polymerization ^{d} determined from the area under the melting endotherm and using ΔHf° = 142 J/g | | | | | | |

The data shown in Table 2 reveal that polyethersulfone/poly(butylene terephthalate) block copolymers (P) exhibit high crystallinity at generally high amounts of poly(butylene terephthalate) segments in the block copolymer, but the resulting glass transition temperatures (T_{g}) are comparatively low. On the other hand, high loadings of polyethersulfone segments in the block copolymers result in high glass transition temperatures (T_{g}), but little to no crystallinity.

Polyethersulfone/poly(butylene terephthalate) block copolymers (P) in which the number-average molecular weight of the polyethersulfone segments is 8,000 g/mol or greater show high glass transition temperatures and improved crystallinities even at high loadings of polyethersulfone segments.

## Claims

1. A process for preparing a polyarylenesulfone/polyester block copolymer (P), comprising the steps:
ai) converting a reaction mixture (RM1), which comprises the components,
(A1) at least one polyarylenesulfone polymer (PS1) comprising phenolic hydroxy groups,
(A2) at least one aliphatic alcohol having a halogen substituent,
in the presence of at least one aprotic polar solvent, to obtain a reaction mixture (RM2) comprising at least one functionalized polyarylenesulfone polymer (PS2) having terminal hydroxyalkyl groups and the at least one aprotic polar solvent,
aii) separating the at least one functionalized polyarylenesulfone polymer (PS2) from the reaction mixture (RM2),
b) converting a reaction mixture (RM3), which comprises
(B1) the at least one functionalized polyarylenesulfone polymer (PS2) obtained in step aii),
(B2) at least one aromatic dicarboxy compound,
(B3) at least one aliphatic dihydroxy compound,
to obtain a reaction mixture (RM4) comprising the polyarylenesulfone/polyester block copolymer (P).

2. The process according to claim 1, wherein the polyarylenesulfone polymer (PS1) comprises units of the general formula (I) 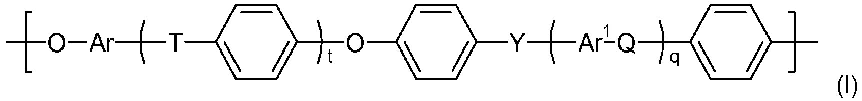 in which
t, q are each independently 0, 1, 2 or 3,
Q, T, Y are each independently a chemical bond or group selected from -O-, -S-, -SO₂-, S=O, C=O, -N=N-, -CR^{a}R^{b}-, where R^{a} and R^{b} are each independently a hydrogen atom, C₁-C₁₀-alkyl, C₁-C₁₀-alkoxy or C₆-C₁₈-aryl, where at least one of Q, T and Y is not -O-, and at least one of Q, T and Y is -SO₂-, and
Ar, Ar¹ are each independently an arylene group having from 6 to 18 carbon atoms.

3. The process according to claim 1 or 2, wherein component (A2) is at least one aliphatic alcohol having a halogen substituent and has the general formula (II)
X¹-CH₂-R¹-CH₂-OH (II)
in which
R¹ is a chemical bond or C₁-C₁₀-alkanediyl, and
X¹ is selected from the group consisting of F, Cl, Br and I.

4. The process according to any one of claims 1 to 3, wherein component (A2) comprises at least 50% by weight of at least one aliphatic alcohol having a halogen substituent, selected from the group consisting of 2-chloro-1-ethanol, 3-chloro-1-propanol, 4-chloro-1-butanol, 5-chloro-1-pentanol, 4-chloro-2-methyl-1-butanol and 3-chloro-2,2-dimethyl-1-propanol, based on the total weight of the component (A2).

5. The process according to any one of claims 1 to 4, wherein component (B2) is at least one dicarboxy compound of the general formula (III) 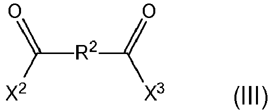 in which
R² is selected from the group consisting of unsubstituted or at least monosubstituted C₁-C₁₀-alkanediyl, phenylene, naphthalinediyl, biphenyldiyl and furandiyl,
where the substituents are C₁-C₁₀-alkyl,
X², X³ are each independently selected from the group consisting of OR³, F, Cl and Br, wherein R³ is H, C₁-C₁₀-alkyl or C₁-C₁₀-alkenyl.

6. The process according to any one of claims 1 to 5, wherein component (B2) comprises at least 50% by weight, based on the total weight of the component (B2), of at least one dicarboxy compound selected from the group consisting of terephthalic acid, dimethyl terephthalate, diethyl terephthalate, terephthaloyl dichloride and terephthaloyl dibromide.

7. The process according to any one of claims 1 to 6, wherein component (B3) comprises at least 50% by weight, based on the total weight of the component (B3), of at least one aliphatic dihydroxy compound selected from the group consisting of ethylene glycol, diethylene glycol, triethylene glycol, 1,3-propanediol, 1,4-butanediol, 2-methyl-1,3-propanediol, 1,5-pentandiol, neopentyl glycol, 1,6-hexanediol, 2,2,4,4-tetramethyl-1,3-cyclobutanediol and 1,4-cyclohexanedimethanol.

8. The process according to any one of claims 1 to 7, wherein the polyarylenesulfone polymer (PS1) is obtained by converting the components
(C1) at least one aromatic dihalogen compound, and
(C2) at least one aromatic dihydroxy compound,
in the presence of at least one aprotic polar solvent and at least one metal carbonate with a molar excess of component (C2) and wherein step ai) is carried out immediately after the conversion of component (C1) and (C2).

9. The process according to claim 8, wherein component (C1) comprises at least 50% by weight of at least one aromatic dihalogen compound selected from the group consisting of 4,4'-dichlorodiphenylsulfone and 4,4'-difluorodiphenylsulfone, based on the total weight of component (C1).

10. The process according to claim 8 or 9, wherein component (C2) comprises at least 50% by weight of at least one aromatic dihydroxy compound selected from the group consisting of 4,4'-dihydroxybiphenyl, 4,4'-dihydroxydiphenylsulfone, bisphenol A, 4,4'-dihyxdroxybenzophenone and hydroquinone, based on the total weight of component (C2).

11. The process according to any one of claims 1 to 10, wherein the reaction mixture (RM1) further comprises as component (A3) at least one halide salt selected from the group consisting of lithium chloride, lithium bromide, lithium iodide, sodium chloride, sodium bromide, sodium iodide, potassium chloride, potassium bromide, potassium iodide, magnesium chloride, magnesium bromide, magnesium iodide, calcium chloride, calcium bromide and calcium iodide.

12. The process according to any one of claims 1 to 11, wherein the reaction mixture (RM3) further comprises at least one esterification catalyst as component (B4) selected from the group consisting of titanium(IV) hydroxides, titanium(IV) carboxylates, titanium(IV) alkoxides, titanium(IV) hydroxyalkoxides, titanium(IV) aminoalkoxides, titanium(IV) halides, aluminum(III) hydroxides, aluminum(III) carboxylates, aluminum(III) alkoxides, aluminum(III) hydroxyalkoxides, aluminum(III) aminoalkoxides, aluminum(III) halides, silicon(IV) hydroxides, silicon(IV) carboxylates, silicon(IV) alkoxides, silicon(IV) hydroxyalkoxides, silicon(IV) aminoalkoxides, silicon(IV) halides, germanium(IV) hydroxides, germanium(IV) carboxylates, germanium(IV) alkoxides, germanium(IV) hydroxyalkoxides, germanium(IV) aminoalkoxides, germanium(IV) halides, tin(IV) hydroxides, tin(IV) carboxylates, tin(IV) alkoxides, tin(IV) hydroxyalkoxides, tin(IV) aminoalkoxides, tin(IV) halides, lead(IV) hydroxides, lead(IV) carboxylates, lead(IV) alkoxides, lead(IV) hydroxyalkoxides, lead(IV) aminoalkoxides, lead(IV) halides, arsenic(III) hydroxides, arsenic(III) carboxylates, arsenic(III) alkoxides, arsenic(III) hydroxyalkoxides, arsenic(III) aminoalkoxides, arsenic(III) halides, antimony(III) hydroxides, antimony(III) carboxylates, antimony(III) alkoxides, antimony(III) hydroxyalkoxides, antimony(III) aminoalkoxides, antimony(III) halides, bismuth(III) hydroxides, bismuth(III) carboxylates, bismuth(III) alkoxides, bismuth(III) hydroxyalkoxides, bismuth(III) aminoalkoxides and bismuth(III) halides.

13. A process for preparing a functionalized polyarylenesulfone polymer (PS2), which comprises the steps of
ai) converting a reaction mixture (RM1), which comprises the components,
(A1) at least one polyarylenesulfone polymer (PS1) comprising phenolic hydroxy groups,
(A2) at least one aliphatic alcohol having a halogen substituent,
(A3) at least one halide salt,
in the presence of at least one aprotic polar solvent, to obtain a reaction mixture (RM2) comprising the at least one functionalized polyarylenesulfone polymer (PS2) having terminal hydroxyalkyl groups and the at least one aprotic polar solvent,
aii) separating the at least one functionalized polyarylenesulfone polymer (PS2) from the reaction mixture (RM2).

14. A polyarylenesulfone/polyester block copolymer (P) obtained according to any one of claims 1 to 11, wherein the polyarylenesulfone/polyester block copolymer (P) comprises at least 30% by weight, based on the total weight of the polyarylenesulfone/polyester block copolymer (P), of units of the general formula (I) 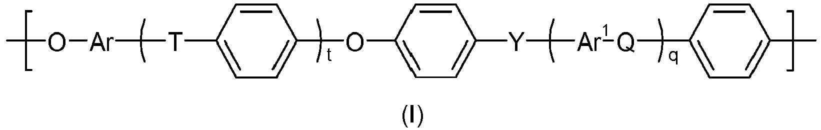 in which
t, q are each independently 0, 1, 2 or 3,
Q, T, Y are each independently a chemical bond or group selected from -O-, -S-, -SO₂-, S=O, C=O, -N=N-, -CR^{a}R^{b}- where R^{a} and R^{b} are each independently a hydrogen atom or a C₁-C₁₀-alkyl, C₁-C₁₀-alkoxy or C₆-C₁₈-aryl group, where at least one of Q, T and Y is not -O-, and at least one of Q, T and Y is -SO₂-, and
Ar, Ar¹ are each independently an arylene group having from 6 to 18 carbon atoms.

15. The polyarylenesulfone/polyester block copolymer (P) according to claim 14, wherein the units of the general formula (I) have an number-average molecular weight (Mₙ) of at least 8,000 g/mol, as determined by gel permeation chromatography (GPC).
